(19) Europäisches Patentamt
European Patent Office
Office européen des brevets

(11) **EP 1 155 879 B1**

(12) **EUROPÄISCHE PATENTSCHRIFT**

(45) Veröffentlichungstag und Bekanntmachung des Hinweises auf die Patenterteilung:
**14.02.2007   Patentblatt 2007/07**

(51) Int Cl.:
***B60C 23/06*** *(2006.01)*

(21) Anmeldenummer: **01109648.4**

(22) Anmeldetag: **19.04.2001**

(54) **Verfahren zur verbesserten Bestimmung des Verhältnisses der Radien der Räder eines Fahrzeuges zueinander**

Method for improved determination of the ratios of the wheel radius of a vehicle with each other

Procédé pour une détermination améliorée des rapports des rayons des roues d'un véhicule entre elles

(84) Benannte Vertragsstaaten:
**DE FR IT SE**

(30) Priorität: **17.05.2000   DE 10024178**

(43) Veröffentlichungstag der Anmeldung:
**21.11.2001   Patentblatt 2001/47**

(73) Patentinhaber: **WABCO GmbH**
**30453 Hannover (DE)**

(72) Erfinder:
• **Dieckmann, Thomas, Dr.**
**30982 Pattensen (DE)**
• **Michaelsen, Arne**
**30167 Hannover (DE)**

(74) Vertreter: **Schrödter, Manfred et al**
**WABCO GmbH**
**Postfach 91 12 62**
**30432 Hannover (DE)**

(56) Entgegenhaltungen:
**EP-A- 0 768 193        DE-A- 19 807 880**
**US-A- 5 524 482**

EP 1 155 879 B1

**Beschreibung**

Die Erfindung betrifft ein Verfahren zur verbesserten Bestimmung des Verhältnisses der Radien der Räder (auch Radradienverhältnis genannt) eines Fahrzeuges zueinander gemäß dem Oberbegriff des Patentanspruchs 1. Derartige Radradienverhältnisse können beispielsweise zur Erkennung eines unzulässigen Reifendrucks verwendet werden.

Ein Verfahren zur Erkennung eines unzulässigen Reifendrucks ist aus der DE 43 27 492 Cl bekannt.

Bei Fahrzeugen mit einem Antiblockiersystem ist üblicherweise in der Nähe jedes Rades eine Drehzahlerfassungseinrichtung angeordnet, die aus einem mit der Raddrehzahl drehenden, mit Zähnen versehenen Polrad und einem unbeweglich an der Radaufhängung befestigten elektromagnetischen Impulsgeber besteht. Mittels dieser Einrichtung kann die Drehzahl des Rades direkt bestimmt werden. Die Radgeschwindigkeit kann indirekt unter Verwendung des Radradius oder -durchmessers bestimmt werden.

Bei der Auswertung der Drehzahlsignale im Rahmen von bestimmten Regelungs- oder Warnfunktionen, bei denen die Drehzahlsignale miteinander verglichen werden, wie z. B. bei einer Schlupfregelung oder einer Reifendruckwarnung, tritt bei Kurvenfahrt eine Differenz zwischen den Drehzahlsignalen auf, welche nicht zu einer Auslösung der Regelungs- oder Warnfunktion führen soll. Die Drehzahldifferenz infolge der Kurvenfahrt ist jedoch nicht ohne weiteres von einer durch Radschlupf oder Reifendruckänderung hervorgerufenen Drehzahldifferenz zu unterscheiden. Bei dem bekannten Verfahren wird dieses Problem dadurch umgangen, daß die Kurvenfahrt, bzw. zumindest ein oberhalb eines vorgegebenen Kurvenfahrt-Grenzwertes liegender Grad an Kurvenfahrt, aus dem Verfahren ausgeklammert wird.

Aus der EP 0 768 193 A1 ist ein Verfahren zur Reifendruck-Überwachung mit folgenden Schritten bekannt: Ein Antriebsrad-Schlupfraten-Berechnungsmittel berechnet die Schlupfraten der Antriebsräder; ein Antriebsrad-Drehmoment-Berechnungsmittel berechnet ein Antriebsrad-Drehmoment; ein Antriebsrad-Schlupfraten-Schätzungsmittel schätzt eine Schwankungscharakteristik in den Antriebsrad-Schlupfraten relativ zu dem Antriebsrad-Drehmoment unter Verwendung einer Methode der kleinsten Quadrate; ein Drehzahlverhältnis-Berechnungsmittel berechnet Drehzahlverhältnisse zwischen nicht angetriebenen Rädern und Antriebsrädern in einem Zustand, in welchem die Schwankungscharakteristik des Antriebsrad-Drehmoments gleich Null ist; dann bestimmt ein Druckverminderungs-Bestimmungsmittel eine Druckverminderung aus einer Durchmesser-Differenz zwischen nicht angetriebenen Rädern und Antriebsrädern durch Vergleich der Drehzahlverhältnisse mit einem Referenzwert.

Aus der US 5,524,482 ist ein Verfahren zur Erkennung eines luftleeren Reifenzustandes bekannt, umfassend die Schritte: Erkennen der Winkelgeschwindigkeit jedes Reifens, Erzeugung eines Signals, das proportional ist zur erkannten Winkelgeschwindigkeit, direkte Ermittlung des Luftdruckes für nur ein Rad, Erzeugung eines Signals, das proportional zum ermittelten Luftdruck ist, und arithmetischer Verarbeitung der Signale, die in den vorhergehenden Schritten erzeugt worden sind, sowie Erzeugung eines Warnsignals bei unzureichendem Reifendruck.

Der Erfindung liegt daher die Aufgabe zugrunde, ein Verfahren zur verbesserten Bestimmung des Verhältnisses der Radien der Räder eines Fahrzeuges anzugeben, das auch bei Kurvenfahrt ohne Einschränkung einsetzbar ist.

Diese Aufgabe wird durch die in dem Patentanspruch 1 angegebene Erfindung gelöst. Weiterbildungen und vorteilhafte Ausgestaltungen der Erfindung sind in den Unteransprüchen angegeben.

Die Erfindung hat den Vorteil, daß zur Kompensation der Kurvenfahrteinflüsse lediglich ein Fahrzeugbewegungssignal erforderlich ist, was konkret das Signal eines weiteren Sensors ist, welcher in derzeitigen und zukünftigen Fahrzeugregelungssystemen mit Fahrdynamikregelung ohnehin regelmäßig vorhanden ist. Die Kurvenfahrteinflüsse können dann rein rechnerisch kompensiert werden. Dies wird in der Praxis durch eine Erweiterung des Rechen- und Steueralgorithmus in einem elektronischen Steuergerät realisiert. Mittels einer aus dem Fahrzeugbewegungssignal gewonnenen Gierrate des Fahrzeuges wird der Kurvenfahrteinfluß aus den Radradienverhältnissen herausgerechnet. Die Erfindung ist somit praktisch ohne Mehraufwand einsetzbar.

Als Sensor zur Ermittlung des Fahrzeugbewegungssignals wird vorzugsweise ein Gierratensensor verwendet. In einer vorteilhaften Ausgestaltung der Erfindung kann alternativ oder zusätzlich auch ein Lenkwinkelsensor und/oder ein Querbeschleunigungssensor eingesetzt werden, wobei aus den Signalen dieser Sensoren unter Hinzuziehung der Fahrzeuggeschwindigkeit ebenfalls die Gierrate des Fahrzeugs in bekannter Weise (DE 198 17 686 A1) ermittelt werden kann. Wenn mehrere der zuvor genannten Sensoren zur Verfügung stehen, so können auch mehrere der Signale zur gegenseitigen Plausibilitätsprüfung verwendet werden.

Die Erfindung wird im folgenden unter Verwendung von Zeichnungen näher erläutert.

Es zeigen

Fig. 1    ein schematisches Modell eines vierrädrigen Fahrzeuges in Draufsicht und

Fig. 2    ein Rad des Fahrzeugs gemäß Fig. 1 und

Fig. 3    eine bevorzugte Ausführungsform der Erfindung als Blockdiagramm und

Fig. 4    das Fahrzeug gemäß Fig. 1 in einer erweiterten Darstellung.

In den Figuren werden gleiche Bezugszeichen für einander entsprechende Teile und Signale verwendet.

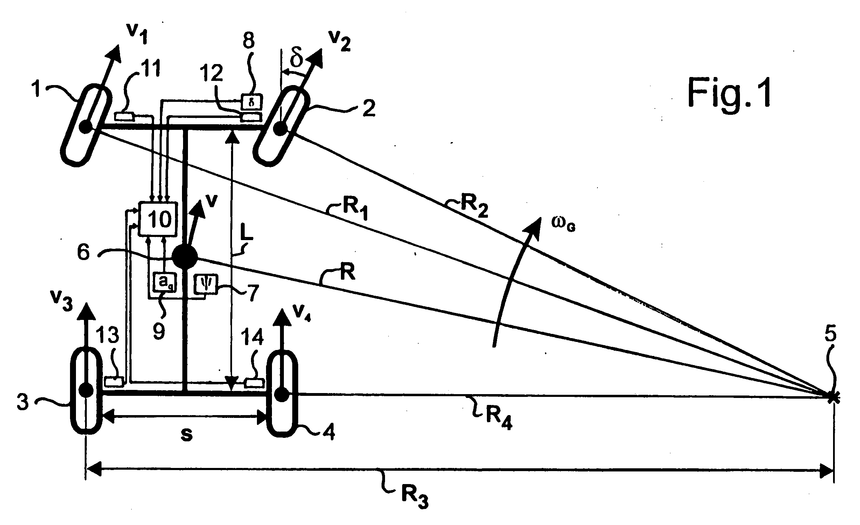

In der Fig. 1 sind die für die Erläuterung der Erfindung erforderlichen Teile eines Fahrzeugs sowie die zugehörigen physikalischen Größen dargestellt. Das Fahrzeug weist vier Räder (1, 2, 3, 4) auf, die sich mit Geschwindigkeiten ($V_1$, $V_2$, $V_3$, $V_4$) relativ zu einem Punkt (5) bewegen. In der Darstellung gemäß Fig. 1 befindet sich das Fahrzeug in einer Rechtskurve. Der Mittelpunkt des Fahrzeugs (6) bewegt sich mit einer Geschwindigkeit (V) ebenfalls relativ zu dem Punkt (5). Vorzugsweise im Bereich des Mittelpunkts (6) des Fahrzeugs ist ein Gierratensensor (7) angeordnet, der ein Fahrzeugbewegungssignal ($\dot{\psi}$) an ein elektronisches Steuergerät (10) abgibt. Das elektronische Steuergerät (10) empfängt außerdem Signale von im Bereich der Räder (1, 2, 3, 4) angeordneten Drehzahlsensoren (11, 12, 13, 14) sowie als weitere Fahrzeugbewegungssignale ($\delta$, $a_q$) Signale von einem Querbeschleunigungssensor (9) und einem Lenkwinkelsensor (8).

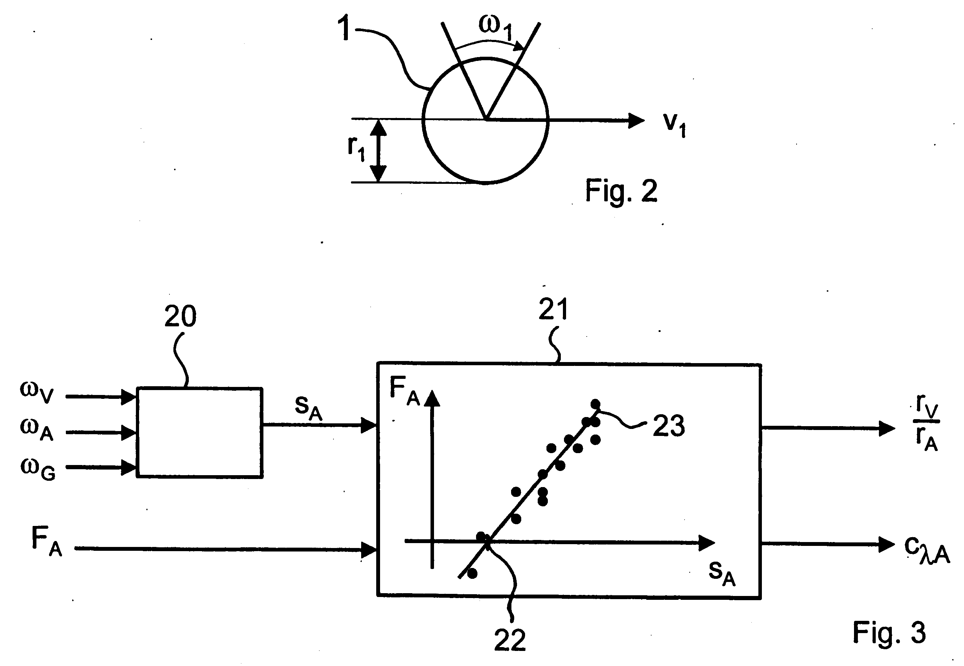

Die Drehzahlsignale werden in dem elektronischen Steuergerät (10) aufbereitet und in Winkelgeschwindigkeiten ($\omega_1$ $\omega_2$, $\omega_3$, $\omega_4$) umgerechnet. Der Zusammenhang der Winkelgeschwindigkeiten ($\omega_1$ $\omega_2$, $\omega_3$, $\omega_4$), der Radradien ($r_1$, $r_2$, $r_3$, $r_4$) und der Radgeschwindigkeiten ($V_1$, $V_2$, $V_3$, $V_4$) ist in der Fig. 2 für das Rad (1) dargestellt. Bei schlupffreier Bewegung entspricht die Winkelgeschwindigkeit ($\omega_1$ $\omega_2$, $\omega_3$, $\omega_4$) eines Rades multipliziert mit dem Radradius ($r_1$, $r_2$, $r_3$, $r_4$) der jeweiligen Radgeschwindigkeit ($V_1$, $V_2$, $V_3$, $V_4$). Bezüglich des Rades (1) lautet somit der Zusammenhang konkret:

$$V_1 = \omega_1 \bullet r_1 \qquad\qquad [1]$$

Das von dem Gierratensensor (7) empfangene Signal ($\dot{\psi}$) verarbeitet das elektronische Steuergerät zu einer Gierrate ($\omega_G$), ebenso das von dem Lenkwinkelsensor empfangene Signal ($\delta$) und das von dem Querbeschleunigungssensor (9) empfangene Signal ($a_q$) unter Hinziehung der Fahrzeuggeschwindigkeit (V).

Des weiteren seien anhand der Fig. 1 die geometrischen Größen (R, $R_1$, $R_2$, $R_3$, $R_4$, L, S) definiert, wobei (R) den Abstand des Fahrzeugmittelpunkts (6) von dem Punkt (5) angibt, die Größen ($R_1$, $R_2$, $R_3$, $R_4$) die Abstände der Räder (1, 2, 3, 4) bzw. der Radmittelpunkte zu dem Punkt (5) angeben und die Größe (S) die Spurweite und die Größe (L) den Radstand des Fahrzeugs angibt.

In der Fig. 3 ist schematisch dargestellt, wie anhand des Antriebsschlupfs ($S_A$) eines Antriebsrades (3 oder 4) bezogen auf ein nicht angetriebenes Rad (1 oder 2) und eines Antriebskraftsignals ($F_A$) mittels eines dem Fachmann im einzelnen bekannten Kalman-Filters (21) ein Radradienverhältnis ($r_V/r_A$) zwischen dem jeweils verwendeten Vorderrad (1, 2) und dem jeweils verwendeten Hinterrad (3, 4) bestimmt wird. Des weiteren wird mittels des Kalman-Filters (21) eine Reifensteifigkeit ($C_{\lambda A}$) bestimmt, welche eine Aussage über das Reibverhalten des Reifens auf dem jeweiligen Untergrund erlaubt. Die Verwendung eines Kalman-Filters für derartige Zwecke ist beispielsweise im einzelnen in folgenden Veröffentlichungen näher erläutert:

Heiko Grünberg, Untersuchung des Radradienverhältnisses und des Schlupfaufkommens als Beitrag zur Fahrsicherheit, Fortschritt-Berichte VDI, Reihe 12, Nr. 378.

Fredrik Gustafsson, Estimation and change detection of tire-road friction using the wheel slip.

Fredrik Gustafsson, Slip-based tire-road friction estimation, 28. November 1996.

Das Antriebskraftsignal ($F_A$) kann beispielsweise von einer elektronischen Motorsteuerung über ein Datenbussystem dem Steuergerät (10) zugeführt werden.

Bei bekannten Verfahren wird der Antriebsschlupf ($S_A$) aus den Winkelgeschwindigkeiten eines Vorderrades ($\omega_V$) und eines Antriebsrades ($\omega_A$) bestimmt, so daß bei Kurvenfahrt ein unkorrekter Schlupfwert ermittelt wird. Bei der vorliegenden Erfindung wird nun mittels des in dem Block (20) vorgesehenen Rechenschritts, der im folgenden noch näher erläutert wird, zusätzlich die Gierrate ($\omega_G$) berücksichtigt und hierdurch der Kurveneinfluß aus dem Antriebsschlupf ($S_A$) eliminiert.

In einer bevorzugten Ausführungsform der Erfindung wird der Antriebsschlupf ($S_A$) in dem Block (20) gemäß folgender Gleichung bestimmt:

$$S_A = \frac{\omega_A}{\omega_V} \cdot \frac{r_A}{r_V} \cdot \sqrt{\frac{1}{1 - \frac{L^2}{r_V^2} \cdot \frac{\omega_G^2}{\omega_V^2}}} - 1 \qquad\qquad [2]$$

Hiermit wird, wie schon erwähnt, der um den Kurveneinfluß bereinigte Antriebsschlupf ($S_A$) einer Fahrzeugseite (rechts oder links) bestimmt. Der Rechenschritt gemäß Block (20) wie auch die Kalman-Filterung gemäß Block (21) wird daher zweimal nach Art eines Unterprogramms ausgeführt, wobei im einen Fall die für die linke Fahrzeugseite geltenden Winkelgeschwindigkeiten ($\omega_1$, $\omega_3$) und das Antriebskraftsignal ($F_3$) als Eingangsgrößen verwendet werden und dementsprechend als Ausgangsgrößen bzw. Zwischengröße auch die für die linke Fahrzeugseite geltenden Größen ($S_3$, $r_1/r_3$, $C_{\lambda 3}$) als Ergebnis ermittelt werden. Im anderen Fall werden die für die rechte Fahrzeugseite geltenden Winkelgeschwindigkeiten ($\omega_2$, $\omega_4$) und das Antriebskraftsignal ($F_4$) als Eingangsgrößen verwendet, und es werden die für die rechte Fahrzeugseite geltenden Größen ($S_4$, $r_2/r_4$, $C_{\lambda 4}$) als Ergebnis ermittelt.

Aus diesen Ergebnissen können nun für die linke und die rechte Fahrzeugseite Schlupfwerte ($S_{3Korr}$, $S_{4Korr}$) der Antriebsräder ermittelt werden, die um den sogenannten Nullschlupfanteil korrigiert sind. Der Nullschlupfanteil entspricht der Nullstelle (22) der Ausgleichsgeraden (23) des Kalman-Filters (21), d.h. der Schlupfwert bei der Antriebskraft Null. Der Nullschlupfanteil ist definitionsgemäß außerdem identisch mit dem Radradienverhältnis derselben Fahrzeugseite, so daß die korrigierten Schlupfwerte ($S_{3Korr}$, $S_{4Korr}$) wie folgt ermittelt werden können:

$$S_{3Korr} = S_3 - r_1/r_3 \qquad\qquad [3]$$

$$S_{4Korr} = S_4 - r_2/r_4 \qquad\qquad [4]$$

In einer bevorzugten Ausgestaltung der Erfindung werden die Radradienverhältnisse der Räder einer Achse unter Verwendung der zuvor bestimmten Ergebnisse und weiterer geometrischer Fahrzeugdaten wie folgt bestimmt:

Vorderachse:

$$\frac{r_1}{r_2} = \frac{\omega_2}{\omega_1} \cdot \sqrt{1 + \frac{\omega_G^2}{\omega_2^2} \cdot \frac{S}{r_2^2} \cdot \left( S + 2 \cdot \sqrt{\frac{\omega_2^2}{\omega_G^2} \cdot r_2^2 - L^2} \right)} \qquad [5]$$

Hinterachse:

$$\frac{r_3}{r_4} = \frac{\omega_4}{\omega_3} \cdot \left( 1 + \frac{\omega_G}{\omega_4} \cdot \frac{S}{r_4} \cdot (S_{4korr} + 1) \right) \cdot \frac{1}{1 - \dfrac{S_{3korr} - S_{4korr}}{S_{3korr} + 1}} \qquad [6]$$

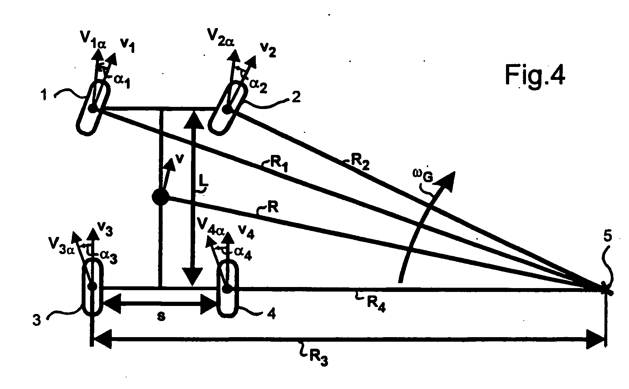

In einer weiteren vorteilhaften Ausgestaltung der Erfindung werden zur Bestimmung des Antriebsschlupfs ($S_A$) neben den schon erwähnten Größen auch die Schräglaufwinkel ($\alpha_1$, $\alpha_2$, $\alpha_3$, $\alpha_4$), wie in der Fig. 4 dargestellt, berücksichtigt. Hierdurch läßt sich ein hinsichtlich der Genauigkeit noch weiter verbessertes Ergebnis bei der Bestimmung der Radradienverhältnisse erzielen. Der Schräglaufwinkel eines Rades gibt an, um welchen Winkelbetrag die wirkliche Bewegung eines Rades von der bei schlupffreiem Verhalten theoretisch vorliegenden Richtung abweicht, d. h. der Schräglaufwinkel ist ein Maß für den seitlichen Schlupf eines Rades. Unter Einbeziehung der Schräglaufwinkel ($\alpha_1$, $\alpha_2$, $\alpha_3$, $\alpha_4$) kann der Antriebsschlupf ($S_A$) gemäß folgender Beziehung bestimmt werden:

$$S_A = \frac{r_A \cdot \omega_A \cdot \cos\alpha_V}{r_V \cdot \omega_V \cdot \cos\left( \arcsin\left( \frac{L}{r_V} \cdot \frac{\omega_G}{\omega_V} \cdot \cos\alpha_A \cdot \cos\alpha_V \right) - \alpha_A \right)} - 1$$

$$[7]$$

Die Gleichung [7] kommt vorzugsweise in dem Block (20) alternativ zu der Gleichung [2] zur Anwendung, d.h. sie wird ebenfalls nach Art eines Unterprogramms einmal für die linke Fahrzeugseite und ein weiteres Mal für die rechte Fahrzeugseite ausgeführt.

Mittels eines in dem Steuergerät (10) vorgesehenen Überwachungsprogramms werden nun fortlaufend die so ermittelten Radradienverhältnisse ($r_1/r_2$, $r_1/r_3$, $r_2/r_4$, $r_3/r_4$) überwacht. Bei einer charakteristischen Änderung des Verhältnisses eines Rades zu den anderen Rädern wird dann ein unzulässiger Reifendruck erkannt und über eine in der Fig. 1 nicht dargestellte, im Blickfeld des Fahrers angeordnete Anzeigelampe als Warnsignal angezeigt. Die Erkennung der charakteristischen Änderung erfolgt vorzugsweise dann, wenn ein vorbestimmter Schwellenwert überschritten wird, wie anhand des folgenden Beispiels erläutert werden soll.

Es sei angenommen, daß das rechte Hinterrad (4) einen unzulässig niedrigen Reifendruck annimmt, etwas infolge eines Reifenschadens. In diesem Fall verringert sich der Radius ($r_4$), ohne daß sich nennenswerte Veränderungen an den Radien ($r_1$, $r_2$, $r_3$) ergeben. Dies erkennt das Steuergerät (10) daran, daß sich sowohl das Radradienverhältnis ($r_2/r_4$) der rechten Fahrzeugseite als auch das Radradienverhältnis ($r_3/r_4$) der Hinterachse erhöht und hierbei jeweils der zuvor erwähnte Schwellenwert überschritten wird. Die Radradienverhältnisse ($r_1/r_2$, $r_1/r_3$) behalten dabei im wesentlichen ihre Werte bei.

## Patentansprüche

1.   Verfahren zur verbesserten Bestimmung des Verhältnisses der Radien ($r_1$, $r_2$, $r_3$, $r_4$) der Räder (1, 2, 3, 4) eines Fahrzeuges zueinander, bei dem mittels an den Rädern (1, 2, 3, 4) angeordneter Drehzahlsensoren (11, 12, 13, 14) die Winkelgeschwindigkeiten ($\omega_1$, $\omega_2$, $\omega_3$, $\omega_4$) der einzelnen Räder (1, 2, 3, 4) des Fahrzeuges bestimmt werden, **dadurch gekennzeichnet, daß** mittels wenigstens eines weiteren Sensors (7, 8, 9) ein Fahrzeugbewegungssignal ($\dot{\psi}$, $\delta$, $a_q$) ermittelt wird, aus dem die Gierrate ($\omega_G$) des Fahrzeugs bestimmbar ist, und daß das Verhältnis der Radien ($r_1$, $r_2$, $r_3$, $r_4$) der Räder (1, 2, 3, 4) wenigstens aus den Winkelgeschwindigkeiten ($\omega_1$, $\omega_2$, $\omega_3$, $\omega_4$) der Räder (1, 2, 3, 4) und dem Fahrzeugbewegungssignal ($\dot{\psi}$, $\delta$, $a_q$) berechnet wird.

2.   Verfahren nach Anspruch 1, **dadurch gekennzeichnet, daß** das Verhältnis ($r_1/r_3$, $r_2/r_4$) der Radien eines Vorderrades (1, 2) und eines an der gleichen Fahrzeugseite angeordneten Hinterrades (3, 4) zueinander unter Verwendung eines Kalman-Filters (21) ermittelt wird.

3.   Verfahren nach einem der vorhergehenden Ansprüche, **dadurch gekennzeichnet, daß** die Verhältnisse der Radien ($r_1$, $r_2$, $r_3$, $r_4$) der Räder (1, 2, 3, 4) zueinander überwacht werden und bei einer charakteristischen Änderung des Verhältnisses eines Rades zu anderen Rädern ein unzulässiger Reifendruck erkannt wird.

4.   Verfahren nach Anspruch 3, **dadurch gekennzeichnet, daß** bei Erkennung des unzulässigen Reifendrucks ein Warnsignal erzeugt wird.

5.   Verfahren nach einem der vorhergehenden Ansprüche, **dadurch gekennzeichnet, daß** als Sensor zur Ermittlung des Fahrzeugbewegungssignals ($\dot{\psi}$, $\delta$, $a_q$) ein Gierratensensor (7) und/oder ein Lenkwinkelsensor (8) und/oder ein Querbeschleunigungssensor (9) verwendet wird.

## Claims

1.   Method for improved determination of the ratio of the radii ($r_1$, $r_2$, $r_3$, $r_4$) of the wheels (1, 2, 3, 4) of a vehicle to one another, in which the angular velocities ($\omega_1$, $\omega_2$, $\omega_3$, $\omega_4$) of the individual wheels (1, 2, 3, 4) of the vehicle are determined by means of rotational speed sensors (11, 12, 13, 14) arranged on the wheels (1, 2, 3, 4), **characterised in that** a vehicle movement signal ($\dot{\psi}$, $\delta$, $a_q$) is determined by means of at least one further sensor (7, 8, 9), from which signal the yaw rate ($\omega_G$) of the vehicle can be determined, and **in that** the ratio of the radii ($r_1$, $r_2$, $r_3$, $r_4$) of the wheels (1, 2, 3, 4) is calculated at least from the angular velocities ($\omega_1$, $\omega_2$, $\omega_3$, $\omega_4$) of the wheels (1, 2, 3, 4) and the vehicle movement signal ($\dot{\psi}$, $\delta$, $a_q$).

2.   Method according to claim 1, **characterised in that** the ratio ($r_1/r_3$, $r_2/r_4$) of the radius of a front wheel (1, 2) to the radius of a rear wheel (3, 4) located on the same side of the vehicle is determined using a Kalman filter (21).

3.   Method according to any one of the preceding claims, **characterised in that** the ratios of the radii ($r_1$, $r_2$, $r_3$, $r_4$) of the wheels (1, 2, 3, 4) to one another are monitored and, in the case of a characteristic change in the ratio of one wheel to other wheels, an inadmissible tyre pressure is detected.

4. Method according to claim 3, **<u>characterised in that</u>**, when the inadmissible tyre pressure is detected, a warning signal is produced.

5. Method according to any one of the preceding claims, **<u>characterised in that</u>** a yaw rate sensor (7) and/or a steering angle sensor (8) and/or a transverse acceleration sensor (9) is used as the sensor for determining the vehicle movement signal ($\dot{\psi}$, $\delta$, $a_q$).

**Revendications**

1. Procédé pour la détermination améliorée de la relation des rayons ($r_1$, $r_2$, $r_3$, $r_4$) des roues (1, 2, 3, 4) d'un véhicule les uns par rapport aux autres, dans lequel on détermine la vitesse angulaire ($\omega_1$, $\omega_2$, $\omega_3$, $\omega_4$) des roues individuelles (1, 2, 3, 4) du véhicule au moyen des détecteurs de vitesse de rotation (11, 12, 13, 14) agencés sur les roues (1, 2, 3, 4), **caractérisé en ce qu'**au moyen d'au moins un autre détecteur (7, 8, 9), on détecte un signal de mouvement de véhicule ($\psi$, $\delta$, $a_q$) à partir duquel on peut déterminer le taux de lacet ($\omega_G$) du véhicule, et **en ce que** l'on calcule la relation des rayons ($r_1$, $r_2$, $r_3$, $r_4$) des roues (1, 2, 3, 4) au moins à partir des vitesses angulaires ($\omega_1$, $\omega_2$, $\omega_3$, $\omega_4$) des roues (1, 2, 3, 4) et du signal de mouvement de véhicule ($\psi$, $\delta$, $a_q$).

2. Procédé selon la revendication 1, **caractérisé en ce que** on détecte la relation ($r_1/r_3$, $r_2/r_4$) des rayons d'une roue avant (1, 2) et d'une roue arrière (3, 4), agencée sur le même côté du véhicule, l'un par rapport à l'autre en utilisant un filtre de Kalman (21).

3. Procédé selon l'une des revendications précédentes, **caractérisé en ce que** l'on surveille les relations des rayons ($r_1$, $r_2$, $r_3$, $r_4$) des roues (1,2, 3, 4) les uns par rapport aux autres et lors d'une modification caractéristique de la relation d'une roue par rapport à d'autres roues, on reconnaît une pression inadmissible des pneumatiques.

4. Procédé selon la revendication 3, **caractérisé en ce que** lors de la reconnaissance d'une pression inadmissible des pneumatiques, un signal d'avertissement est émis.

5. Procédé selon l'une des revendications précédentes, **caractérisé en ce que** l'on utilise à titre de détecteur pour déterminer le signal de mouvement de véhicule ($\psi$, $\delta$, $a_q$) un détecteur de taux de lacet (7) et/ou un détecteur d'angle de braquage (8) et/ou un détecteur d'accélération transversale (9).

Fig.1

EP 1 155 879 B1

$1$

$\omega_1$

$v_1$

$r_1$

Fig. 2

$20$

$\omega_V$

$\omega_A$

$\omega_G$

$s_A$

$F_A$

$21$

$F_A$

$23$

$s_A$

$22$

$\dfrac{r_V}{r_A}$

$c_{\lambda A}$

Fig. 3

Fig.4